# EUROPEAN PATENT APPLICATION

(11) **EP 4 564 502 A1**
(43) Date of publication of application: **04.06.2025**
(21) Application number: 23846028.1
(22) Date of filing: 07.06.2023
(51) Int. Cl.: H01M 10/052, H01M 4/38, H01M 4/50, H01M 4/587, H01M 10/0569, H01M 10/058, H01M 50/103, H01M 50/107

(54) **LITHIUM SECONDARY BATTERY AND METHOD FOR PRODUCING SAME**

(30) Priority: 25.07.2022 JP 2022117844
(71) Applicant: Panasonic Intellectual Property Management Co., Ltd., Kadoma-shi, Osaka 571-0057 (JP)
(72) Inventor: FUJIMOTO, Masahisa, Kadoma-shi, Osaka 571-0057 (JP)
(74) Representative: Novagraaf International SA
(86) International application number: PCT/JP2023/021258
(87) International publication number: WO 2024/024292

(57) **Abstract**

A lithium secondary battery 100 of the present disclosure includes: a positive electrode 5 including MnO₂; a negative electrode 6 including a negative electrode active material with lithium ions occluded; and an electrolytic solution including a mixed solvent of a cyclic carbonate and a chain carbonate, the electrolytic solution being impregnated into the positive electrode 5 and the negative electrode 6. The negative electrode active material includes, for example, at least one selected from the group consisting of graphite and silicon. The cyclic carbonate includes, for example, at least one selected from the group consisting of ethylene carbonate and vinylene carbonate. The chain carbonate includes, for example, ethyl methyl carbonate.

## Description

### TECHNICAL FIELD

The present disclosure relates to a lithium secondary battery and a method for producing the same.

### BACKGROUND ART

A material most known as the positive electrode active material in a lithium secondary battery is a composite oxide containing cobalt. However, the estimated reserves of cobalt are not necessarily large, and there are concerns that cobalt will be depleted in the near future. Examples of positive electrode active material being free of rare metals such as cobalt include manganese dioxide and transition metal phosphates. Transition metal phosphates, such as lithium iron phosphate, are already being put to practical use. Meanwhile, manganese dioxide having a much higher capacity density than the transition metal phosphates and being inexpensive is expected as the next-generation positive electrode active material.

Patent Literature 1 describes a non-aqueous secondary battery that includes a positive electrode where manganese dioxide is used as the active material and a negative electrode where lithium or a lithium alloy is used as the active material, and the positive electrode further includes Li₂MnO₃. The electrolytic solution used is a mixed solvent of propylene carbonate (PC) and dimethoxyethane (DME), with lithium perchlorate dissolved therein at a concentration of 1 mol/liter.

### CITATION LIST

### Patent Literature

Patent Literature 1: JP S63-114064, A
Patent Literature 2: WO 2022/118545 A1

### SUMMARY OF INVENTION

### Technical Problem

The present disclosure provides a technique for improving the capacity density of a lithium secondary battery that includes MnO₂ for a positive electrode.

### Solution to Problem

The present disclosure provides a lithium secondary battery including:
a positive electrode including MnO₂;
a negative electrode including a negative electrode active material with lithium ions occluded; and
an electrolytic solution including a mixed solvent of a cyclic carbonate and a chain carbonate, the electrolytic solution being impregnated into the positive electrode and the negative electrode.

### Advantageous Effects of Invention

According to the present disclosure, it is possible to improve capacity density of a lithium secondary battery that includes MnO₂ for a positive electrode.

### BRIEF DESCRIPTION OF DRAWINGS

FIG. 1 is a cross-sectional view of a lithium secondary battery according to one embodiment of the present disclosure.
FIG. 2 is a process chart showing a method for producing a lithium secondary battery.
FIG. 3A is a cross-sectional view showing an example of positional relationship between a container, a Li metal foil, and an electrode group.
FIG. 3B is a perspective view showing an example of positional relationship between a container, a Li metal piece, and an electrode group.
FIG. 4 is a graph showing charge and discharge curves at a first cycle of lithium secondary batteries of Example 1 and Comparative Example 1.
FIG. 5 is a graph showing charge and discharge curves at a first cycle of lithium secondary batteries of Example 1 and Example 2.
FIG. 6 is a graph showing the results of the charge and discharge cycle test of the lithium secondary battery of Example 1.
FIG. 7A is a graph showing a charge and discharge curve of the lithium secondary battery of Example 1 in a charge and discharge test 2.
FIG. 7B is a graph showing a charge and discharge curve of a lithium secondary battery of Example 3 in a charge and discharge test 2.

### DESCRIPTION OF EMBODIMENTS

### (Findings on which the present disclosure is based)

Since MnO₂ is free of lithium, a lithium secondary battery using MnO₂ as the positive electrode active material is required to be in a charged state upon completion of assembly. For example, in the non-aqueous secondary battery of Patent Literature 1, the Li metal is used as the negative electrode active material.

As is known to those skilled in the art, lithium secondary batteries using Li metal as the negative electrode active material have poor reversibility. When a Li alloy such as a LiAl alloy is used instead of Li metal, cycle characteristics at a shallow depth are favorable. However, when charge and discharge are repeated at a deep depth, the battery reaches the end of its life after a small number of charge and discharge cycles. Therefore, a lithium secondary battery using MnO₂ as the positive electrode active material has been put to practical use only in applications in which charge and discharge are repeated at a shallow depth, for example, memory backup applications. Another concern is that lithium alloys are rigid, and thus, unsuitable for use in batteries having a wound structure.

In Patent Literature 1, a mixed solvent of propylene carbonate (PC) and dimethoxyethane (DME) is used as the solvent for the non-aqueous electrolytic solution. However, since the mixed solvent has a low withstand voltage, in the battery described in Patent Literature 1, only about half of the theoretical capacity of the positive electrode (MnO₂) can be utilized.

As described in Patent Literature 2, it is also possible to use MnO₂ with occluded lithium, as the positive electrode active material. However, production of such materials is not easy.

Therefore, there is a need for techniques to improve the capacity density of a lithium secondary battery that uses MnO₂ as the positive electrode. Along with improving capacity density, a lithium secondary battery also is required to be practically reversible. Specifically, a lithium secondary battery needs to exhibit favorable cycle characteristics even when charged and discharged at a deep depth.

Embodiments of the present disclosure are described below with reference to the drawings. The present disclosure is not limited to the following embodiments.

### (Embodiments)

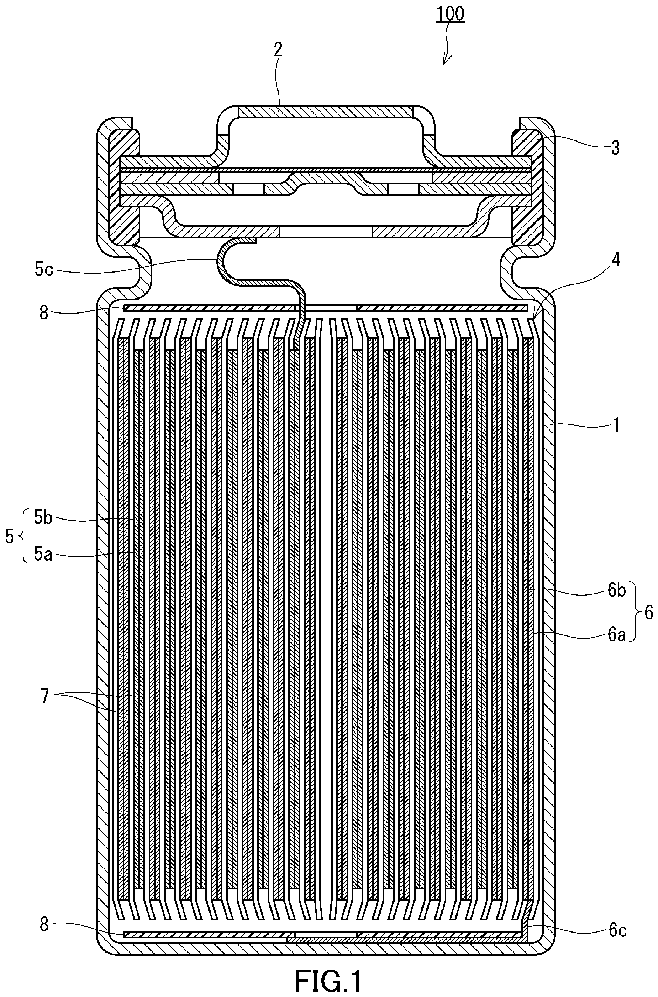

FIG. 1 is a cross-sectional view of a lithium secondary battery according to one embodiment of the present disclosure. A lithium secondary battery 100 includes a container 1 and an electrode group 4. The electrode group 4 has a wound structure. The electrode group 4 is housed in the container 1. The electrode group 4 includes a positive electrode 5, a negative electrode 6, and a pair of separators 7. The electrode group 4 is impregnated with an electrolytic solution. The container 1 has an opening portion sealed with a sealing plate 2. The positive electrode 5 includes a positive electrode current collector 5a and a positive electrode active material layer 5b. To the positive electrode 5, one end of a positive electrode lead 5c is connected. The other end of the positive electrode lead 5c is connected to the back face of the sealing plate 2. An insulating packing 3 is disposed to surround the sealing plate 2. The negative electrode 6 includes a negative electrode current collector 6a and a negative electrode active material layer 6b. To the negative electrode 6, one end of a negative electrode lead 6c is connected. The other end of the negative electrode lead 6c is connected to the bottom face of the container 1. Insulation rings 8 are each disposed on the upper face and the lower face of the electrode group 4.

In the present embodiment, the container 1 has a negative electrode polarity, and the sealing plate 2 has a positive electrode polarity. Alternatively, it is possible that the container 1 has a positive electrode polarity while the sealing plate 2 has a negative electrode polarity.

As a positive electrode current collector 5a, a sheet or a film formed of a metal material such as aluminum, stainless steel, titanium, and an alloy thereof can be used. Aluminum and an alloy thereof are suitable as materials for the positive electrode current collector 5a because they are inexpensive and easy to make into a thin film. The sheet or the film can be porous or non-porous. A metal foil, a metal mesh or the like can be used as the sheet or the film. Carbon materials such as carbon as auxiliary conductive materials may be applied on the surface of the positive electrode current collector 5a.

The positive electrode active material layer 5b includes MnO₂ as a positive electrode active material. In particular, upon completion of assembly of the lithium secondary battery 100, the positive electrode active material layer 5b includes MnO₂. The lithium secondary battery 100 is in a charged state upon completion of assembly. Therefore, the lithium secondary battery 100 is capable of starting discharge upon completion of assembly. "Upon completion of assembly" refers to a time point in a period from the time point when production of the lithium secondary battery 100 is completed to when an external power source is connected to lithium secondary battery 100 to perform a charge and discharge process.

As the MnO₂, electrolytic manganese dioxide can be used. The electrolytic manganese dioxide is manganese dioxide produced by an electrolytic method. The electrolytic manganese dioxide is known as a material for primary batteries and it is inexpensive. Electrolytic manganese dioxide may be the one that has been heat-treated at a temperature in a range from 150°C to 430°C. Manganese dioxide is represented in chemical formulae as "MnO₂", but is actually a non-stoichiometric compound.

The crystal structure of MnO₂ is not particularly limited. The MnO₂ with various crystal structures can be used, and the examples include α-MnO₂, β-MnO₂, γ-MnO₂, ε-MnO₂, λ-MnO₂, δ-MnO₂, γ-β-MnO₂, and R-MnO₂ (ramsdellite-type manganese dioxide). The MnO₂ may include a plurality of crystal phases, or may be a mixed crystal. The MnO₂ may include at least one selected from the group consisting of γ-β-MnO₂, ramsdellite, and β-MnO₂. Ramsdellite, γ-β-MnO₂ that can be produced from electrolytic manganese dioxide, and β-MnO₂ that can also be produced from electrolytic manganese dioxide, all have a tunnel structure. All of them are inexpensive and readily available. In particular, the γ-β-MnO₂ exhibits the highest discharge capacity density when used as an active material. In other words, Mn can be easily reduced. For this reason, the γ-β-MnO₂ is also suitable as an active material for the lithium secondary battery 100. Note that γ-β-MnO₂ represents a mixed crystal of γ-MnO₂ and β-MnO₂.

The positive electrode active material layer 5b may include a positive electrode active material other than MnO₂, or may include MnO₂ alone as the positive electrode active material.

The positive electrode active material layer 5b may also include other materials such as a conductive agent and a binder.

The conductive agent is used to reduce the resistance of positive electrode 5. A carbon material or a conductive polymer compound can be used as the conductive agent. Examples of the carbon material include carbon black, graphite, acetylene black, carbon nanotubes, carbon nanofibers, graphene, fullerene, and graphite oxide. Examples of the conductive polymer compound include polyaniline, polypyrrole, and polythiophene.

The binder is used to improve the binding property of the materials constituting the positive electrode 5. A polymer material such as polyvinylidene fluoride, a vinylidene fluoride-hexafluoropropylene copolymer, a vinylidene fluoride-tetrafluoroethylene copolymer, polytetrafluoroethylene, carboxymethyl cellulose, polyacrylic acid, styrenebutadiene copolymer rubber, polypropylene, polyethylene, and polyimide can be used as the binder.

A sheet or film made of a metal material such as stainless steel, nickel, copper, and an alloy of stainless steel, nickel, or copper can be used as negative electrode current collector 6a. The sheet or film may be porous or non-porous. A metal foil, a metal mesh, or the like can be used as the sheet or film. A surface of the negative electrode current collector 6a may be applied with a carbon material such as carbon, as a conductive auxiliary material.

The negative electrode active material layer 6b includes a negative electrode active material with occluded lithium ions. In particular, the negative electrode active material layer 6b includes lithium ions upon completion of assembly of the lithium secondary battery 100. The lithium secondary battery 100 is in a charged state upon completion of the assembly.

The negative electrode active material is a material capable of reversibly occluding and releasing lithium ions. The negative electrode active material includes at least one selected from the group consisting of carbon materials and materials that can form an alloy with lithium. An example of the carbon material is graphite. Examples of materials that can form an alloy with lithium include silicon, silicon-containing oxides, tin, zinc alloys, bismuth, and germanium. One of these negative electrode active materials may be used, or two or more of them may be used in combination.

The negative electrode active material layer 6b may include at least one selected from the group consisting of graphite and silicon, as the negative electrode active material. The graphite may be included alone in the negative electrode active material layer 6b, as the negative electrode active material. The graphite is recommended as it is less likely to deteriorate even when charge and discharge are repeated at a deep depth. Carbon materials other than graphite may be used as the negative electrode active material. Silicon is advantageous for increasing the capacity of the lithium secondary battery 100 since it exhibits a larger capacity than graphite.

In the present embodiment, the lithium secondary battery 100 is in a charged state upon completion of assembly, and can start discharging. In the case where graphite is used as the negative electrode active material, the negative electrode 6 may contain LiC₆ upon completion of assembly of the lithium secondary battery 100. In the case where silicon is used as the negative electrode active material, the negative electrode 6 may contain Li₂₂Si₅ upon completion of assembly of the lithium secondary battery 100.

The negative electrode active material layer 6b may include a conductive agent and a binder. The same materials that can be used for the positive electrode active material layer 5b can be used for the negative electrode active material layer 6b, as the conductive agent, the binder or the like.

The electrolytic solution is a non-aqueous electrolytic solution impregnated into the positive electrode 5, the negative electrode 6 and the separators 7. The electrolytic solution may fill the internal space of the container 1. The action of non-aqueous electrolyte 19 allows lithium ions to migrate between the positive electrode 5 and the negative electrode 6.

The electrolytic solution includes a non-aqueous solvent and a lithium salt.

A mixed solvent of cyclic carbonate and chain carbonate is used as the non-aqueous solvent. The mixed solvent of cyclic carbonate and chain carbonate is excellent in withstand voltage. Therefore, by using the mixed solvent of cyclic carbonate and chain carbonate, it is possible to charge MnO₂ to a high charge voltage. In other words, it is possible to increase the capacity of the lithium secondary battery 100 by making full use of MnO₂. In addition, since the negative electrode 6 includes a negative electrode active material with occluded lithium ions, the lithium secondary battery 100 exhibits favorable cycle characteristics even when being charged and discharged at a deep depth.

Cyclic carbonate is typically a five-membered cyclic carbonate, such as ethylene carbonate, propylene carbonate, butylene carbonate, and vinylene carbonate. The cyclic carbonates may include at least one selected from the group consisting of ethylene carbonate and vinylene carbonate. By combining the cyclic carbonates with chain carbonates, an electrolytic solution with high withstand voltage can be obtained.

At least one of the hydrogen atoms of the cyclic carbonate may be substituted with a halogen atom. In other words, a halogen atom may be bonded to a carbon atom contained in the cyclic carbonate. Cyclic carbonates having halogen atoms exhibit higher withstand voltage and superior stability. Examples of cyclic carbonates having halogen atoms include fluoroethylene carbonate and chloroethylene carbonate. The number of halogen atoms included in the cyclic carbonate may be one or more.

A cyclic carbonate is represented by the following Formula (1) or Formula (2), for example. In Formula (1), R¹, R², R³, R⁴ independently represent a hydrogen atom or a halogen atom. In Formula (2), R⁵ and R⁶ independently represent a hydrogen atom or a halogen atom. As shown in Formula (1) or Formula (2), a halogen atom may be bonded to a carbon atom at a 3-position of a five-membered ring cyclic carbonate, or may be bonded to a carbon atom at a 4-position. The halogen atom may be F or Cl.

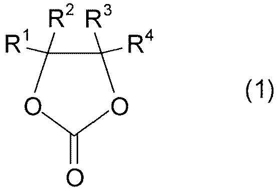

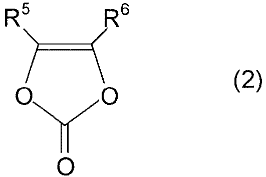

As a chain carbonate, at least one selected from the group consisting of ethyl methyl carbonate, diethyl carbonate, and dimethyl carbonate can be used. By combining these chain carbonates with cyclic carbonates, electrolytic solutions with high withstand voltage can be obtained. Among these, ethyl methyl carbonate is recommended.

Lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonyl imide (LiN(SO₂C₂F₅)₂), LiAsF₆, LiCF₃SO₃, and lithium difluoro(oxalato)borate can be used as the lithium salts. One type selected from these electrolyte salts may be used, or two or more types selected from these electrolyte salts may be used in combination.

The separators 7 have lithium ion conductivity. The material of the separators 7 is not particularly limited as long as lithium ions are allowed to pass through the material. The material of the separators 7 may be at least one selected from the group consisting of gel electrolytes, an ion exchange resin membrane, a semipermeable membrane, and a porous membrane. When the separators 7 are made of these materials, safety of the lithium secondary battery 100 can be sufficiently ensured. Examples of the gel electrolytes include gel electrolytes including a fluororesin such as PVdF. Examples of the ion exchange resin membrane include a cation exchange membrane and an anion exchange membrane. Examples of the porous membrane include a porous membrane made of a polyolefin resin and a porous membrane made of glass paper obtained by weaving glass fibers into a nonwoven fabric.

The container 1 is a container formed of a metal, such as aluminum and stainless steel. The container 1 may have a cylindrical shape or a prismatic shape.

The electrode group 4 may be wound cylindrically or elliptically.

The shape of the lithium secondary battery 100 is not particularly limited. Various shapes such as a cylindrical shape and a prismatic shape may be adopted for the shape of lithium secondary battery 100.

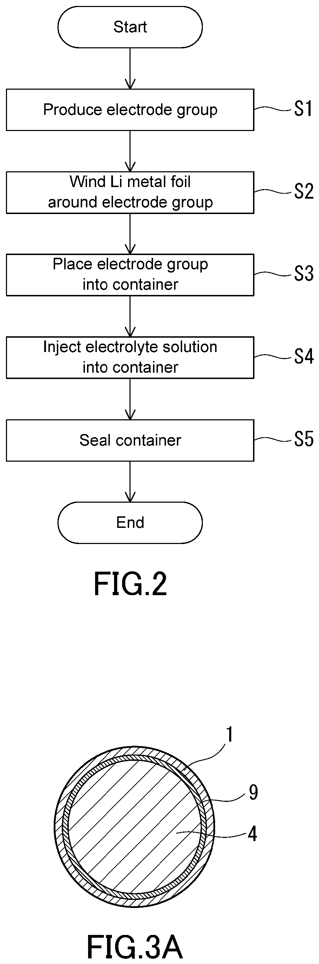

Next, a method for producing the lithium secondary battery 100 is explained. FIG. 2 is a process chart showing a method for producing the lithium secondary battery 100.

In step S1, an electrode group 4 is produced. Specifically, after the positive electrode 5 and negative electrode 6 are produced, the positive electrode 5, the negative electrode 6, and a pair of separators 7 are stacked and wound so that the electrode group 4 will be formed in a spiral shape. In this manner, the electrode group 4 is obtained.

The positive electrode 5 can be produced by applying a positive electrode composite on one or both surfaces of the positive electrode current collector 5a, followed by drying and rolling. The positive electrode 5 has a thickness of 30 µm to 200 µm, and is preferably highly flexible. The positive electrode composite is obtained by kneading and uniformly dispersing materials such as a positive electrode active material, a binder and conductive agents, by using a dispersant.

The method of applying the positive electrode composite to the positive electrode current collector 5a is not particularly limited. The positive electrode composite slurry can be applied to the positive electrode current collector 5a by using a slit die coater, a reverse roll coater, a lip coater, a blade coater, a knife coater, a gravure coater, a dip coater, or the like. The applied positive electrode composite may be dried naturally or by using a drying device.

After the drying, the positive electrode 5 is rolled so that the positive electrode active material layer 5b will have a predetermined thickness. The rolling may be performed a plurality of times using a roll press machine, or it may be performed a plurality of times while changing the pressure for pressing with the roll press machine. After the rolling, the positive electrode lead 5c for extracting electricity is welded to the positive electrode current collector 5a.

The negative electrode 6 can be produced by applying the negative electrode composite on one or both surfaces of the negative electrode current collector 6a, followed by drying and rolling. After the rolling, the negative electrode lead 6c for extracting electricity is welded to the negative electrode current collector 6a. The negative electrode 6 has a thickness of 30 µm to 210 µm, for example, and is preferably highly flexible. The negative electrode composite is obtained by kneading and uniformly dispersing materials such as a negative electrode active material, a binder, and a conductive agent, by using a dispersant.

As a method for producing the negative electrode 6, a dry method may be used instead of the wet method described above. Examples of the dry method for film formation include a vapor deposition method, a sputtering method, and a chemical vapor deposition (CVD) method. All of these methods can be performed in a vacuum. From the viewpoint of efficiently forming the negative electrode active material layer 6b, the vapor deposition method is preferable. As a vapor deposition method, both the electron beam vapor deposition and the resistance heating vapor deposition are adoptable. In the case of performing vapor deposition of an oxide, a nitride or an oxynitride, an oxide and/or a nitride can be used as the evaporation material. Alternatively, reactive deposition may be performed by evaporating a negative electrode active material such as silicon and tin from an evaporation source while introducing oxygen gas, nitrogen gas, or ions or radicals containing elements constituting these gases between the negative electrode current collector 6a and the evaporation source.

In step S2, the Li metal foil is wound around the electrode group 4. In the case where the negative electrode active material is graphite, the amount of Li in the Li metal foil is adjusted to satisfy a molar ratio of, for example, lithium : carbon = 1:6. In the case where the negative electrode active material is silicon, the amount of Li in the Li metal foil is adjusted to satisfy a molar ratio of, for example, lithium : silicon = 22:5.

In step S3, the electrode group 4 is placed in the container 1. Specifically, the electrode group 4 and the Li metal foil are disposed inside the container 1 so that the Li metal foil will be electrically connected to the negative electrode 6 of the electrode group 4 and that the Li metal foil will be positioned between the electrode group 4 and the inner surface of the container 1. With this configuration, by injecting the electrolytic solution, lithium ions can be supplied to the negative electrode 6 to be occluded thereinto.

FIG. 3A is a cross-sectional view showing an example of the positional relationship between the container 1, the Li metal foil 9, and the electrode group 4. In the example shown in FIG. 3A, the container 1 is a cylindrical container. The electrode group 4 with the Li metal foil 9 wound around is placed in the container 1 so that the Li metal foil 9 can be disposed between the electrode group 4 and the inner surface of the container 1. In the radial direction of the container 1, the electrode group 4, the Li metal foil 9, and the container 1 are arranged in this order. The Li metal foil 9 is in contact with the container 1 and is electrically connected to the negative electrode 6 via the container 1. With this configuration, by injecting an electrolytic solution, lithium ions can be supplied to the negative electrode 6 to be occluded thereinto.

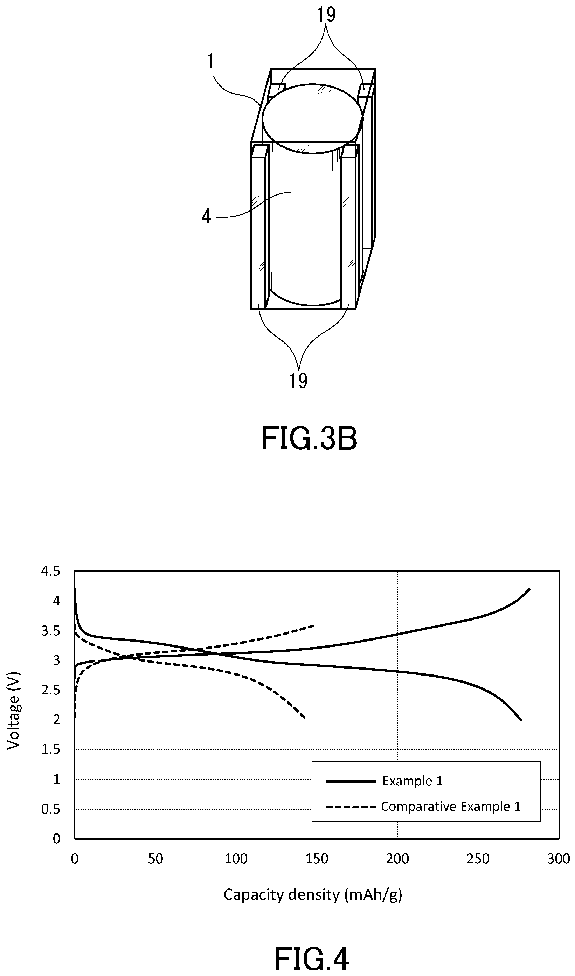

The source of lithium ions is not limited to the Li metal foil 9 shown in FIG. 3A. FIG. 3B is a perspective view showing an example of the positional relationship between the container 1, Li metal pieces 19, and the electrode group 4. In the example shown in FIG. 3B, the source of lithium ions is at least one Li metal piece 19. The container 1 is a prismatic container. The Li metal piece 19 is disposed at at least one of the four corners of the container 1. This allows the Li metal to be disposed between the electrode group 4 and the inner surface of the container 1. The Li metal piece 19 is in contact with the container 1 and is electrically connected to the negative electrode 6 via the container 1. With this configuration, by injecting an electrolytic solution, lithium ions can be supplied to the negative electrode 6 to be occluded thereinto. In the case where a prismatic container 1 is combined with a columnar electrode group 4, dead spaces are formed at the four corners. According to the present embodiment, the dead spaces at the four corners of the prismatic container 1 can be used effectively. The four corners of the prismatic container 1 may be curved.

In the case of using a Li metal piece 19 as a source of lithium ions, the aforementioned step S2 is not necessary. In step S3, the Li metal piece 19 may be placed inside the container 1 after inserting the electrode group 4 into the container 1, or the Li metal piece 19 may be inserted into the container 1 together with the electrode group 4. Alternatively, the Li metal piece 19 may be placed first in the container 1, and then, the electrode group 4 may be placed in the container 1.

The Li metal piece 19 may be placed at each of the four corners of the container 1.

In the example shown in FIG. 3A, the process of placing the electrode group 4 in the container 1 also serves as the process of disposing the Li metal between the electrode group 4 and the inner surface of the container 1. According to the example shown in FIG. 3B, the process of placing the electrode group 4 in the container 1 may also serve as the process of placing the Li metal between the electrode group 4 and the inner surface of the container 1, or these may be separate processes.

In step S4, an electrolytic solution is injected into the container 1. Since the negative electrode 6 is electrically connected to either the Li metal foil 9 or the Li metal piece 19, by injecting the electrolytic solution, the Li metal foil 9 or the Li metal piece 19 dissolves and lithium ions are supplied to the electrolytic solution. The lithium ions migrate to the negative electrode 6 through the electrolytic solution and are occluded into the negative electrode 6. With this configuration, the lithium ions can be occluded easily into the negative electrode 6.

In step S5, the container 1 is sealed.

Through the processes, the lithium secondary battery 100 shown in FIG. 1 is obtained.

After completion of the assembly, the electrode group 4 may be discharged and charged. In one example, the charge termination voltage during charging is 4.2 V or more. Since the electrolytic solution used in this embodiment has excellent withstand voltage, it is possible to charge the lithium secondary battery 100 up to a charge termination voltage of 4.2 V or more. According to this embodiment, the capacity density of MnO₂ can be sufficiently exhibited.

Even if the Li metal is not completely occluded into the negative electrode 6 after the injection of the electrolytic solution into the container 1, the Li metal dissolves in the electrolytic solution and the lithium ions are supplied to the positive electrode 5 by discharging the lithium secondary battery 100. After that, the lithium secondary battery 100 is charged, so that the lithium ions are occluded into the active material such as graphite in the negative electrode 6.

### (Other embodiments)

### (Addendum)

The following techniques are disclosed by the description of the above embodiments.

### (Technique 1)

A lithium secondary battery including:
a positive electrode including MnO₂;
a negative electrode including a negative electrode active material with lithium ions occluded; and
an electrolytic solution including a mixed solvent of a cyclic carbonate and a chain carbonate, the electrolytic solution being impregnated into the positive electrode and the negative electrode.

With this configuration, it is possible to charge the MnO₂ to a high charge voltage. In other words, it is possible to increase the capacity of the lithium secondary battery by making full use of the MnO₂. In addition, since the negative electrode includes a negative electrode active material with occluded lithium ions, the lithium secondary battery exhibits favorable cycle characteristics even when being charged and discharged at a deep depth.

### (Technique 2)

The lithium secondary battery according to Technique 1, wherein the negative electrode active material includes at least one selected from the group consisting of graphite and silicon. The graphite is recommended because it is less likely to deteriorate even when charge and discharge are repeated at a deep depth. The silicon is advantageous for increasing the capacity of the lithium secondary battery because it shows a larger capacity than the graphite.

### (Technique 3)

The lithium secondary battery according to Technique 1 or 2, wherein the cyclic carbonate includes at least one selected from the group consisting of ethylene carbonate and vinylene carbonate. By combining these cyclic carbonates with chain carbonates, an electrolytic solution with high withstand voltage can be obtained.

### (Technique 4)

The lithium secondary battery according to Technique 1 or 2, wherein a halogen atom is bonded to a carbon atom included in the cyclic carbonate. The cyclic carbonate having a halogen atom exhibits a higher withstand voltage and has superior stability.

### (Technique 5)

The lithium secondary battery according to any one of Techniques 1 to 4, wherein the chain carbonate includes ethyl methyl carbonate. By combining ethyl methyl carbonate with cyclic carbonate, an electrolytic solution with high withstand voltage can be obtained.

### (Technique 6)

The lithium secondary battery according to any one of Techniques 1 to 5, wherein the MnO₂ includes electrolytic manganese dioxide. The electrolytic manganese dioxide is inexpensive and known as a material for primary batteries.

### (Technique 7)

A method for producing a lithium secondary battery, the method including:
disposing a Li metal and an electrode group that includes a positive electrode including MnO₂ and a negative electrode including a negative electrode active material, so that the Li metal is electrically connected to the negative electrode of the electrode group, and the Li metal is positioned between the electrode group and an inner surface of the container; and
injecting an electrolytic solution including a mixed solvent of a cyclic carbonate and a chain carbonate into the container.

With this configuration, by injecting the electrolytic solution, lithium ions can be supplied to the negative electrode to be occluded thereinto.

### (Technique 8)

The producing method according to Technique 7, wherein the container is a cylindrical container, and the electrode group with the Li metal wound around is placed inside the container so that the electrode group and the Li metal are disposed inside the container. With this configuration, by injecting the electrolytic solution, lithium ions can be supplied to the negative electrode to be occluded thereinto.

### (Technique 9)

The producing method according to Technique 7, wherein the container is a prismatic container, and the Li metal is disposed at at least one of four corners of the container. With this configuration, by injecting the electrolytic solution, lithium ions can be supplied to the negative electrode to be occluded thereinto. In addition, the dead spaces at the four corners of the rectangular prismatic container can be used effectively.

### (Technique 10)

The producing method according to any one of Techniques 7 to 9, wherein the Li metal is electrically connected to the negative electrode via the container. With this configuration, lithium ions can be easily occluded into the negative electrode 6.

### (Technique 11)

The producing method according to any one of Techniques 7 to 10, further including discharging and charging the electrode group, wherein a charge termination voltage during the charging is 4.2 V or higher. With this configuration, the capacity density of the MnO₂ can be fully improved.

### EXAMPLES

### (Example 1)

A positive electrode composite was prepared by mixing a binder, a conductive agent, a γ-β-MnO₂ powder, and a solvent. The positive electrode composite was applied to an Al current collector to form a coating film. The coating film was dried and rolled to obtain a positive electrode. As the binder, PVdF was used. As the conductive agent, acetylene black was used. As the solvent, N-methylpyrrolidone was used. The ratio of the binder, the conductive agent and the γ-β-MnO₂ powder was 10:5:85 by mass.

The negative electrode composite was prepared by mixing a binder, a graphite powder and a solvent. The negative electrode composite was applied to a Cu current collector to form a coating film. The coating film was dried and rolled to obtain a negative electrode.

A positive electrode lead and a negative electrode lead were welded to the positive electrode and the negative electrode, respectively. Thereafter, an electrode group having a wound structure was produced using the positive electrode and negative electrode. Microporous membranes formed from polyolefin were used as separators.

Next, a Li metal foil was wrapped around the electrode group. The amount of Li in the Li metal foil was adjusted to satisfy the molar ratio of lithium : carbon = 1:6.

Next, the electrode group was placed in a cylindrical container so that the Li metal foil would be electrically connected with the negative electrode via the container. The electrolytic solution was then injected into the container. The electrolytic solution was the one prepared by dissolving LiPF₆ in a mixed solvent including ethylene carbonate and methyl ethyl carbonate in a volume ratio of 1:1 at a concentration of 1 mol/liter. A sealing plate was attached to the container to obtain a lithium secondary battery with the structure shown in FIG. 1.

### (Example 2)

A lithium secondary battery of Example 2 was produced in the same manner as in Example 1, except that the electrolytic solution was prepared using a mixed solvent including vinylene carbonate (VC) and methyl ethyl carbonate (MEC) in a volume ratio of 1:1.

### (Example 3)

A lithium secondary battery of Example 3 was produced in the same manner as in Example 1, except that the electrolytic solution was prepared using a mixed solvent including fluoroethylene carbonate (FEC) and methyl ethyl carbonate (MEC) in a volume ratio of 1:1.

### (Comparative Example 1)

A lithium secondary battery of Comparative Example 1 was produced in the same manner as in Example 1, except that the electrolytic solution was prepared using a mixed solvent including propylene carbonate (PC) and dimethoxyethane (DME) in a volume ratio of 1:1.

### (Charge and discharge test 1)

Charge and discharge test was performed on the lithium secondary batteries of Example 1, Example 2, and Comparative Example 1. First, lithium secondary batteries were discharged, and then the initial charge capacity and the initial discharge capacity were measured. In Example 1 and Example 2, the charge and discharge current was 0.025 C, the charge termination voltage was 4.2 V, and the discharge termination voltage was 2.0 V. In Comparative Example 1, the charge and discharge termination current was 0.025 C, the charge termination voltage was 3.6 V, and the discharge termination voltage was 2.0 V.

FIG. 4 is a graph showing the first charge and discharge curves of the lithium secondary batteries of Example 1 and Comparative Example 1. The horizontal axis represents the capacity density (mAh/g). The vertical axis represents the voltage (V). As shown in FIG. 4, the lithium secondary battery of Example 1 showed a capacity density of approximately 270 mAh/g. In Example 1, there was no significant decomposition of the electrolytic solution up to a charging voltage of 4.2 V. In contrast, the capacity density of the lithium secondary battery in Comparative Example 1 was approximately 150 mAh/g. In Comparative Example 1, it was impossible to charge at a voltage higher than 3.6 V because there was a risk of significant decomposition of the electrolyte.

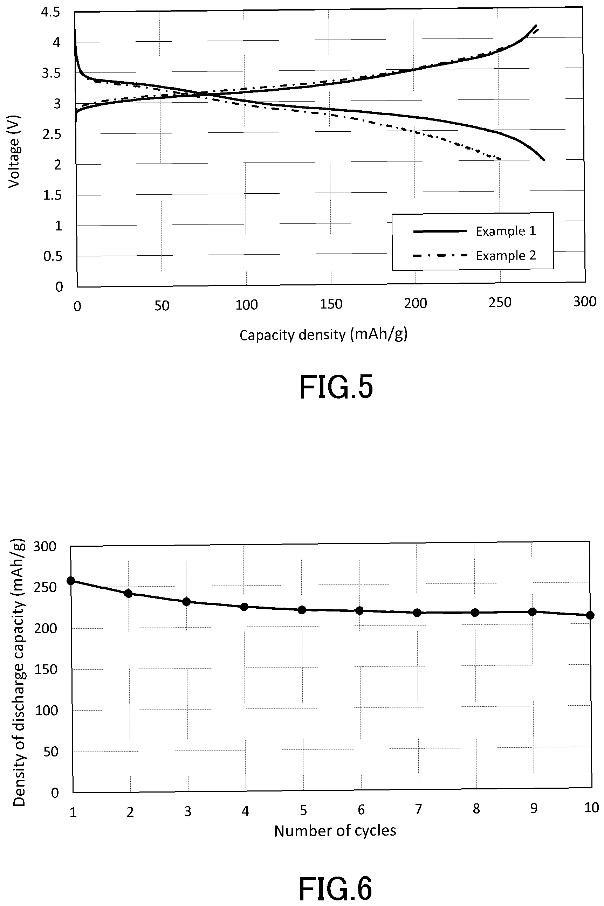

FIG. 5 is a graph showing the initial charge and discharge curves of the lithium secondary batteries of Example 1 and Example 2. Even when the cyclic carbonate in the mixed solvent was changed from ethylene carbonate (Example 1) to vinylene carbonate (Example 2), it was possible to charge at a voltage of 4.2 V, and a high capacity density of 250 mAh/g or more was achieved.

### (Charge and discharge cycle test)

Charge and discharge of the lithium secondary battery of Example 1 was repeated 10 times. The conditions for charge and discharge are as explained in the paragraph referring to the charge and discharge test. The results are shown in FIG. 6.

FIG. 6 is a graph showing the results of the charge and discharge cycle test for the lithium secondary battery of Example 1. The horizontal axis represents the number of cycles, which is the number of charge and discharge cycles. The vertical axis represents the discharge capacity density (mAh/g). As shown in FIG. 6, the lithium secondary battery of Example 1 maintained a discharge capacity density of 200 mAh/g or more even after 10 cycles of charge and discharge at a deep charge depth.

### (Charge and discharge test 2)

A charge and discharge test was performed on the lithium secondary batteries of Example 1 and Example 3. First, the lithium secondary batteries were discharged, and then, the first charge and discharge process was performed. After that, the second charge and discharge process was performed, and the charge capacity and discharge capacity were measured. In the charge and discharge test 2, the charge and discharge current was 0.015 C, the charge termination voltage was 4.2 V, and the discharge termination voltage was 2.0 V.

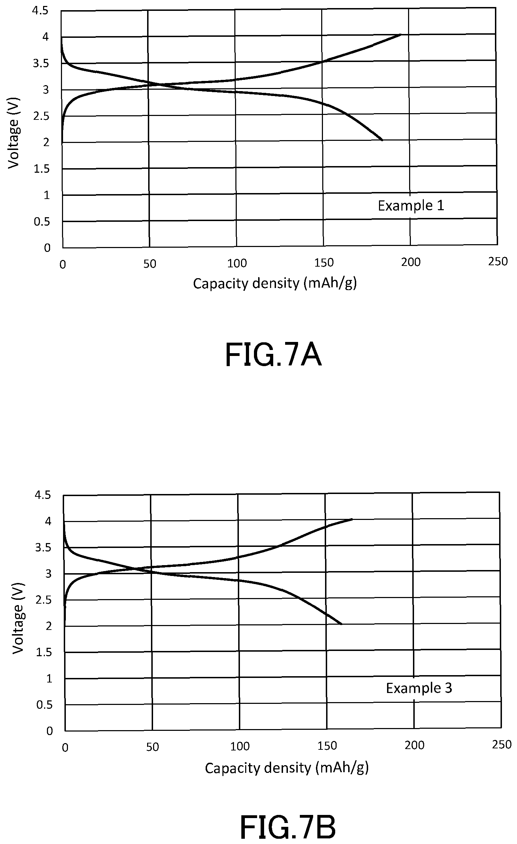

FIG. 7A is a graph showing the charge and discharge curve of the lithium secondary battery of Example 1 in the charge and discharge test 2. FIG. 7B is a graph showing the charge and discharge curve of the lithium secondary battery of Example 3 in the charge and discharge test 2. As shown in FIG. 7A and FIG. 7B, in the charge and discharge test 2, the lithium secondary battery of Example 1 showed a capacity density of approximately 180 mAh/g. The lithium secondary battery of Example 3 showed a capacity density of approximately 160 mAh/g. The current value in the charge and discharge test 2 was approximately 0.6 times the current value in the charge and discharge test 1. Even in such conditions, the lithium secondary batteries of Example 1 and Example 3 still showed a higher capacity density than the capacity density (approximately 150 mAh/g) of the lithium secondary battery of Comparative Example 1 in the charge and discharge test 1. In addition, the lithium secondary battery of Example 3 had a capacity density comparable to the capacity density of the lithium secondary battery of Example 1.

### INDUSTRIAL APPLICABILITY

The technique of the present disclosure is useful for lithium secondary batteries.

## Claims

1. A lithium secondary battery comprising:
a positive electrode comprising MnO₂;
a negative electrode comprising a negative electrode active material with lithium ions occluded; and
an electrolytic solution comprising a mixed solvent of a cyclic carbonate and a chain carbonate, the electrolytic solution being impregnated into the positive electrode and the negative electrode.

2. The lithium secondary battery according to claim 1, wherein
the negative electrode active material comprises at least one selected from the group consisting of graphite and silicon.

3. The lithium secondary battery according to claim 1, wherein
the cyclic carbonate comprises at least one selected from the group consisting of ethylene carbonate and vinylene carbonate.

4. The lithium secondary battery according to claim 1, wherein
a halogen atom is bonded to a carbon atom comprised in the cyclic carbonate.

5. The lithium secondary battery according to claim 1, wherein
the chain carbonate comprises ethyl methyl carbonate.

6. The lithium secondary battery according to claim 1, wherein
the MnO₂ comprises electrolytic manganese dioxide.

7. A method for producing a lithium secondary battery, the method comprising:
disposing a Li metal and an electrode group that comprises a positive electrode comprising MnO₂ and a negative electrode comprising a negative electrode active material, so that the Li metal is electrically connected to the negative electrode of the electrode group, and the Li metal is positioned between the electrode group and an inner surface of the container; and
injecting an electrolytic solution comprising a mixed solvent of a cyclic carbonate and a chain carbonate into the container.

8. The producing method according to claim 7, wherein
the container is a cylindrical container, and
the electrode group with the Li metal wound around is placed inside the container so that the electrode group and the Li metal are disposed inside the container.

9. The producing method according to claim 7, wherein
the container is a prismatic container, and
the Li metal is disposed at at least one of four corners of the container.

10. The producing method according to claim 7, wherein
the Li metal is electrically connected to the negative electrode via the container.

11. The producing method according to claim 7, further comprising discharging and charging the electrode group, wherein
a charge termination voltage during the charging is 4.2 V or more.
